# DEMANDE DE BREVET EUROPEEN

(11) **EP 2 275 719 A1**
(43) Date de publication de la demande: **19.01.2011**
(21) Numéro de dépôt: 10168626.9
(22) Date de dépôt: 06.07.2010
(51) Int. Cl.: F16H 63/48, F16H 61/22, F16H 63/18, B60T 1/00

(54) **Boîte de vitesses comportant un moyen de blocage d'un arbre de sortie et véhicule comportant une telle boîte de vitesses**

(30) Priorité: 17.07.2009 FR 0954954
(71) Demandeur: Peugeot Citroën Automobiles SA, 78140 Vélizy-Villacoublay (FR)
(72) Inventeur: Rouss, Vicky, 92250, La Garenne Colombes (FR); Giannoni, Marc, 75009, Paris (FR)

(57) **Abrégé**

La présente invention concerne une boîte de vitesses de véhicule, notamment pour véhicule automobile, du type qui comporte : un carter, un arbre d'entrée, un arbre de sortie, un pluralité d'engrenages, chaque engrenage étant formé par un pignon fixe porté par un arbre et un pignon fou porté par l'autre arbre, des moyens de crabotage de chaque pignon fou sur l'arbre associé comportant un crabot mobile axialement sous l'action d'une fourchette (5) mue par un actionneur (3) commun audits moyens de crabotage, comportant des moyens de blocage en rotation coopérant sélectivement avec l'arbre de sortie, lesdits moyens de blocage comportant un moyen de commande formé par ledit actionneur (3).

## Description

L'invention concerne une boîte de vitesses de véhicule, notamment pour véhicule automobile comportant un dispositif de blocage d'un arbre de sortie.

L'invention concerne plus particulièrement une boîte de vitesses du type qui comporte au moins : un carter renfermant un arbre d'entrée, un arbre de sortie, un pluralité d'engrenages, chaque engrenage étant formé par un pignon fixe porté par l'arbre d'entrée ou l'arbre de sortie et un pignon fou, engrenant avec le pignon fixe correspondant, porté par l'arbre de sortie ou l'arbre d'entrée, des moyens de crabotage de chaque pignon fou sur l'arbre associé comportant un crabot mobile axialement sous l'action d'une fourchette mue par un actionneur, avec l'actionneur commun aux moyens de crabotage.

Une telle boîte de vitesses se retrouve dans le document FR 2 803 890 où l'actionneur est de type à barillet, comportant plusieurs pistes. Chaque piste commande le déplacement d'une fourchette permettant, pour une certaine rotation du barillet, de sélectionner un rapport de transmission.

Sur une telle boîte de vitesses robotisée, si l'embrayage reliant le moteur à la boîte de vitesse est en position ouverte moteur arrêté, la sélection d'un rapport de transmission pour assurer l'immobilisation du véhicule est inutile. Un actionneur supplémentaire est alors rajouté pour venir commander un dispositif de blocage mécanique, verrouillant l'arbre de sortie de la boîte de vitesses et assurant ainsi la position dite « parking » de la boîte de vitesses. Un tel dispositif additionnel augmente le nombre d'actionneurs, augmentant d'autant le prix de fabrication d'une telle boîte de vitesses tout en multipliant les risques de pannes.

Le but de l'invention est de proposer un dispositif simple et peu onéreux de commande des moyens de blocages de l'arbre de sortie de la boîte de vitesses.

A cet effet, l'invention a pour objet une boîte de vitesses de véhicule, notamment pour véhicule automobile, du type qui comportant un carter renfermant un arbre d'entrée, un arbre de sortie, une pluralité d'engrenages, chaque engrenage étant formé par un pignon fixe porté par un arbre et un pignon fou porté par l'autre arbre, des moyens de crabotage de chaque pignon fou sur l'arbre associé comportant un crabot mobile axialement sous l'action d'une fourchette mue par un actionneur commun audits moyens de crabotage, comportant des moyens de blocage en rotation coopérant sélectivement avec l'arbre de sortie, lesdits moyens de blocage comportant un moyen de commande formé par ledit actionneur.

L'actionneur comporte un barillet mû en rotation par un moteur électrique, avec les moyens de blocage comportent un poussoir sur lequel agît le barillet de l'actionneur créant un déplacement latéral du poussoir pour une certaine rotation du barillet.

Le barillet comporte à sa périphérie une pluralité de pistes s'étendant radialement et destinées à coopérer respectivement avec lesdites fourchettes et ledit poussoir. Chacune des pistes associées aux fourchettes comporte une zone de crabotage R où le pignon fou correspondant est craboté sur son arbre et une zone neutre N où le pignon fou est libre en rotation sur son arbre. La piste associée au poussoir comporte une zone de blocage F en rotation de l'arbre de sortie et une zone neutre N de non blocage en rotation de l'arbre de sortie.

Les moyens de blocage comportent un poussoir sur lequel agissent ledit actionneur et un basculeur commandé en rotation par le poussoir et une roue dentée solidaire en rotation de l'arbre de sortie. Ledit basculeur, en fonction de sa position angulaire, est apte à coopérer avec ladite roue dentée pour bloquer en rotation l'arbre de sortie. La zone de blocage F crée un déplacement latéral du poussoir, commandant la rotation du basculeur, ledit basculeur comportant un doigt venant se positionner entre deux dents de la roue dentée, bloquant ladite roue dentée en rotation. La zone de blocage F de la piste associée au poussoir correspond angulairement à des zones neutres N des pistes associées aux fourchettes.

L'invention a aussi pour objet un véhicule comportant une boîte de vitesses reprenant l'une quelconque des caractéristiques précédentes.

D'autres avantages et caractéristiques techniques de la présente invention apparaîtront plus clairement à la lumière de la description qui suit en référence aux figures des dessins annexés parmi lesquelles :
- Les figures 1 et 2 représentent une vue en perspective partielle et une vue en coupe partielle d'un mécanisme de changement de rapport de transmission et de blocage de l'arbre de sortie de la boîte de vitesses selon l'invention ;
- La figure 3 représente une vue, en perspective partielle, du mécanisme de blocage de l'arbre de sortie de la boîte de vitesses selon l'invention; et
- La figure 4 représente, schématiquement, un développement à plat des pistes de commande d'un barillet commandant le mécanisme de changement de rapport de transmission et le mécanisme de blocage de l'arbre de sortie de la boîte de vitesses selon l'invention.

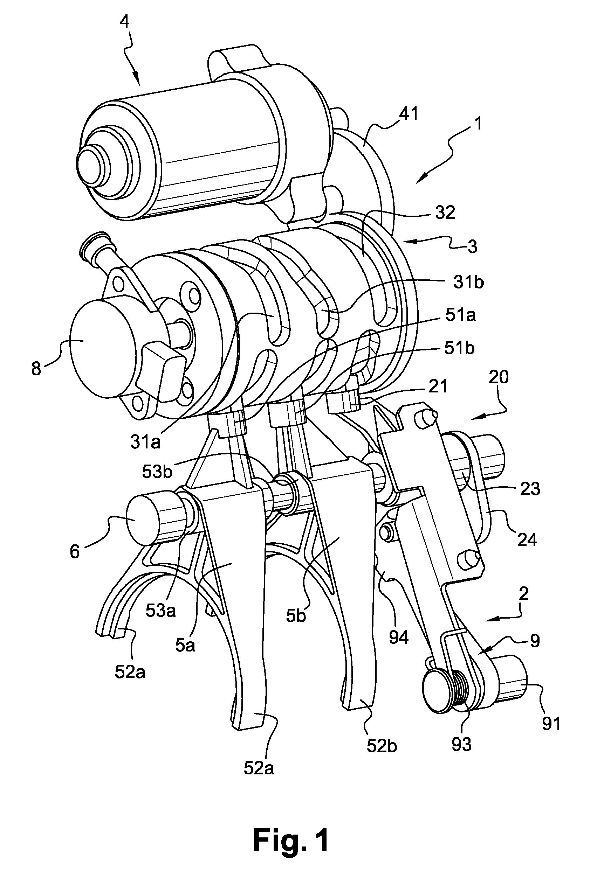

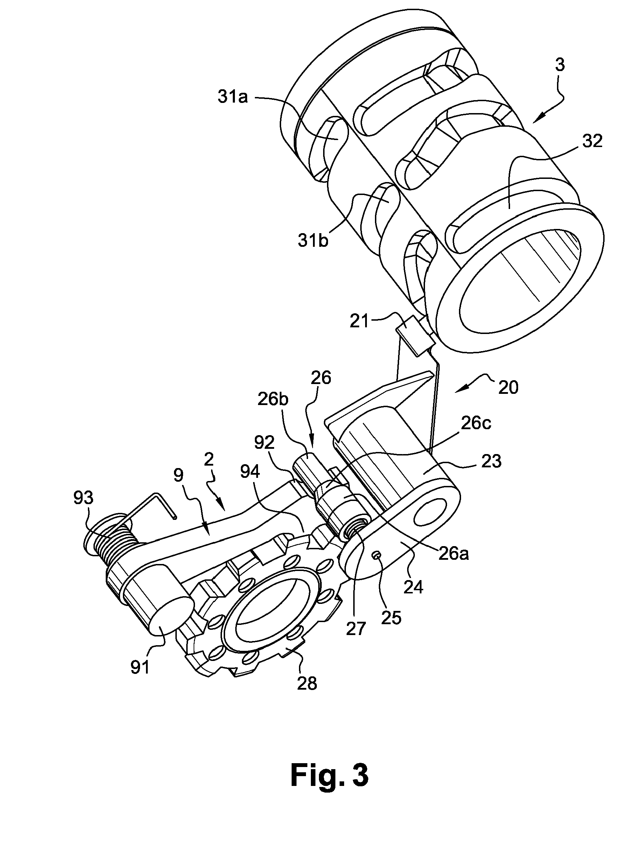

Sur les figures 1 à 3 sont représentés respectivement une vue en perspective partielle d'un mécanisme de changement de rapport de transmission 1 et un mécanisme de blocage 2 de l'arbre de sortie de la boîte de vitesses, une vue en coupe partielle de ces mêmes éléments et une vue en perspective du mécanisme de blocage 2 de l'arbre de sortie de la boîte de vitesses.

Le mécanisme de changement de rapport de transmission 1 se compose d'un barillet 3 mis en rotation par un moteur électrique 4 par l'intermédiaire d'un engrenage 41. Le barillet 3 comporte deux pistes 31 a et 31 b collaborant avec des doigts, respectivement 51 a et 51 b, permettant de déplacer en translation des fourchettes de sélection 5a et 5b lors de sa rotation : les fourchettes 5 comportent une première extrémité formant un doigt 51 venant se positionner dans une piste 31 creusée sur la surface cylindrique du barillet 3. Chaque fourchette 5 comporte une seconde extrémité 52 qui, d'une façon analogue à l'état de la technique (non représenté), est associée à un baladeur positionné entre deux pignons montés fous sur un des arbres constituant la boîte de vitesses. La seconde extrémité 52 de chacune des fourchettes 5 guide en translation le baladeur suivant trois positions. Une première position centrale laissant les deux pignons fous libre en rotation autour de l'arbre, et deux positions, de part et d'autre de cette position centrale, crabotant l'arbre avec l'un ou l'autre des deux pignons fous définissant ainsi deux rapports de transmission. Les fourchettes 5 présentent, en partie centrale, des manchons 53 coulissant autour d'un axe 6, guidant les fourchettes 5 en translation. L'axe 6 comporte (non représenté) une rainure de clavetage longitudinale collaborant avec des clavettes faisant saillie sur la surface interne des manchons 53, immobilisant en rotation les fourchettes 5 sur l'axe 6.

La rotation barillet 3 est contrôlée par un capteur de position 8 positionné dans le prolongement de l'axe de rotation de ce barillet 3, permettant à un calculateur de commander la rotation du moteur électrique 4 en fonction des instructions provenant soit directement du conducteur, lorsque la boîte de vitesses est en mode de sélection de rapports de transmissions manuels, soit par le calculateur de la boîte de vitesses lorsque celle-ci est en mode automatique.

Le barillet 3 se compose aussi d'une piste supplémentaire 32 collaborant avec un doigt 21 d'un poussoir 20, le poussoir 20 constituant une partie du mécanisme de blocage 2 de l'arbre de sortie de la boîte de vitesses. Le poussoir 20 comporte un manchon 23, avec le doigt 21 fixé sur la surface latérale de ce manchon 23. Le manchon 23 permet, comme pour les fourchettes 5, de guider le poussoir 20 en translation tout en l'immobilisant en rotation. Le poussoir 20 comporte dans le prolongement latéral de manchon 23 une biellette 24 guidant en translation un demi-arbre 25 monté parallèle au manchon 23. Le demi-arbre 25 sert à guider en translation un pion 26 et à un ressort 27. Le demi-arbre 25 comporte à son extrémité libre une excroissance formant une butée limitant le coulissement du pion 26 le long du demi-arbre 25, avec le ressort 27 positionné entre la biellette 24 et le pion 26. Le ressort 27 maintient le pion 26 en appui contre la butée du demi-arbre 25. Le pion 26 se compose successivement de deux parties cylindriques de diamètres différents 26a et 26b reliées par une partie centrale conique 26c. La première partie cylindrique 26a, positionnée en regard de la biellette 24, présente un plus grand diamètre que la seconde partie cylindrique 26b. La partie centrale conique 26c forme une surface de transition entre ces deux parties cylindriques 26a et 26b. Un levier 9, monté pivotant autour d'un axe fixe 91, présente à son extrémité libre une surface latérale 92 maintenue en appui contre la surface latérale du pion 26 par un ressort de rappel 93. Comme expliqué ultérieurement, suivant le positionnement du pion 26, la surface latérale 92 du levier 9 est successivement en appui contre la surface latérale de première partie cylindrique 26a du pion 26, contre la surface latérale de la partie conique 26c ou contre la surface latérale de la seconde partie cylindrique 26b, faisant varier, en fonction du diamètre de la partie du pion 26 correspondant l'inclinaison du levier 9 autour de l'axe fixe 91. Le levier 9 comporte, sur le coté opposé de la surface latérale 92 maintenu en appui contre le pion 26, un doigt 94 venant collaborer avec une roue dentée 28 solidaire de l'arbre de sortie de la boîte de vitesses.

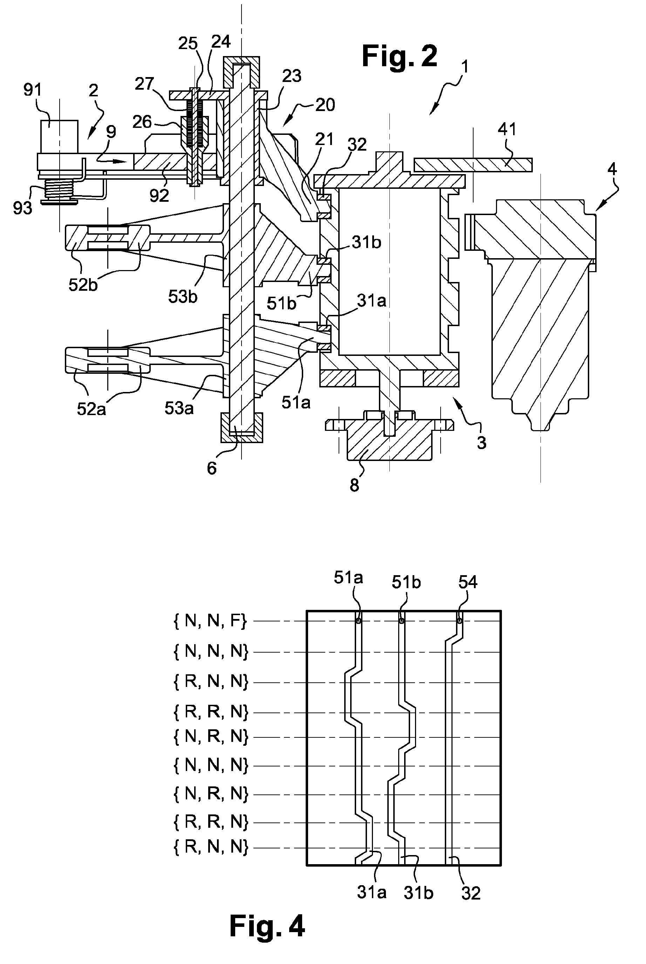

La figure 4 représente, schématiquement, un développement à plat des pistes de commande 31 et 32 du barillet 3 commandant le mécanisme de changement de rapport de transmission et le mécanisme de blocage de l'arbre de sortie de la boîte de vitesses.

Les pistes 31 peuvent présenter trois positions : une position centrale dénommée N correspondant au déplacement en position central du doigt de commande 51 parcourant la piste 31, entrainant la fourchette 5 qui positionne le baladeur correspondant en position centrale, ne crabotant l'arbre correspondant avec aucun des deux pignons fous commandés par cette fourchette 5. Les deux autres positions, dénommées indifféremment R, correspondant au déplacement latéral du doigt de commande 51 entrainant la fourchette 5 et par suite crabotant un des deux pignons fous commandés par cette fourchette 5 avec l'arbre correspondant. Suivant que la piste 31 en position R est à droite ou à gauche de la position N, le baladeur crabote avec l'un ou l'autre des pignons fous correspondant. Ainsi un barillet 3 tel que présenté avec deux pistes permet de commander le passage de quatre rapports de transmission de la boîte de vitesses. Lorsque toutes les pistes 31 sont en position N, la boîte de vitesses est alors au point mort, aucun rapport de transmission n'étant sélectionné. Il est bien entendu possible de rajouter autant de pistes 31 sur le barillet 3 que de fourchettes 5 à commander.

La piste 32 peut présenter deux positions, une position N n'actionnant pas le mécanisme de blocage 2 de l'arbre de sortie de la boîte de vitesses et une position F activant le mécanisme de blocage 2. Une telle position F n'est possible que lorsque la boîte de vitesses est au point mort tel que décrit précédemment. Lors de la commande, soit par un sélecteur actionné directement par le conducteur soit automatiquement par le boitier de gestion de la boîte de vitesses, du mécanisme de blocage 2 de la boîte de vitesses, le moteur électrique 4 commande la rotation du barillet 3 positionnant les pistes 31 en position N et la piste 32 en position F. Le doigt 21 parcourant cette piste 32 crée un déplacement latéral du poussoir 20. Le déplacement latéral du poussoir 20 comprime le ressort 93 poussant le pion 26 à suivre se déplacement latéral. Lors du déplacement du pion 26, le levier 9 est successivement en appui contre la surface latéral de la seconde partie cylindrique 26b du pion 26, contre la surface latéral de la partie conique 26c et contre la surface latérale de la première partie cylindrique 26a, modifiant l'inclinaison du levier 9, basculant le doigt 94 entre deux dents de la roue dentée 28, bloquant l'arbre de sortie de la boîte de vitesse, immobilisant de fait le véhicule. Le fait que le pion 26 ne soit pas directement solidaire du poussoir 20, mais soit entrainer en translation par le ressort 27, permet de temporiser le basculement du doigt 94 au cas où celui-ci serait positionner contre une dent de la roue dentée 28 ne lui permettant pas de venir se positionner entre deux dents. Le véhicule n'étant pas encore immobilisé, un léger déplacement de celui-ci suffit pour que le doigt 94 ne soit plus positionné face à une dent et vienne bloque la rotation de la roue dentée 28 et par suite immobiliser le véhicule.

Bien entendu, l'invention n'est pas limitée au seul mode de réalisation qui vient d'être décrit, il pourra y être apporté de nombreuses modifications de détail sans sortir, pour cela, du cadre de l'invention notamment concernant le mécanisme de blocage 2 de l'arbre de sortie de la boîte de vitesses qui peut présenter différents modes de réalisations.

## Revendications

1. Boîte de vitesses de véhicule, notamment pour véhicule automobile, du type comportant un carter renfermant un arbre d'entrée, un arbre de sortie, une pluralité d'engrenages, chaque engrenage étant formé par un pignon fixe porté par un arbre et un pignon fou porté par l'autre arbre, des moyens de crabotage de chaque pignon fou sur l'arbre associé comportant un crabot mobile axialement sous l'action d'une fourchette (5) mue par un actionneur (3) commun audits moyens de crabotage, ladite boîte de vitesses comportant des moyens de blocage en rotation coopérant sélectivement avec l'arbre de sortie, lesdits moyens de blocage comportant un moyen de commande formé par ledit actionneur (3), **caractérisée en ce que** l'actionneur (3) comporte un barillet mû en rotation par un moteur électrique (4).

2. Boîte de vitesses selon la revendication 1, **caractérisée en ce que** les moyens de blocage comportent un poussoir (20) sur lequel agît le barillet de l'actionneur (3) créant un déplacement latéral du poussoir (20) pour une certaine rotation du barillet.

3. Boîte de vitesses selon la revendication 2, **caractérisée en ce que** ledit barillet comporte à sa périphérie une pluralité de pistes (31, 32) s'étendant radialement et destinées à coopérer respectivement avec lesdites fourchettes (5) et ledit poussoir (20).

4. Boîte de vitesses selon la revendication 3, **caractérisée en ce que** chacune des pistes (31) associées aux fourchettes (5) comportent une zone de crabotage (R) où le pignon fou correspondant est craboté sur son arbre et une zone neutre (N) où le pignon fou est libre en rotation sur son arbre.

5. Boîte de vitesses selon la revendication 3 ou 4, **caractérisée en ce que** la piste associée au poussoir (20) comporte une zone de blocage (F) en rotation de l'arbre de sortie et une zone neutre (N) de non blocage en rotation de l'arbre de sortie.

6. Boîte de vitesses selon la revendication 5, **caractérisée en ce que** les moyens de blocage comportent un basculeur (9) commandé en rotation par le poussoir (20) et une roue dentée (28) solidaire en rotation de l'arbre de sortie, ledit basculeur (9), en fonction de sa position angulaire, est apte à coopérer avec ladite roue dentée (28) pour bloquer en rotation l'arbre de sortie.

7. Boîte de vitesses selon la revendication 6, **caractérisée en ce que** la zone de blocage (F) crée un déplacement latéral du poussoir (20), commandant la rotation du basculeur (9), ledit basculeur (9) comportant un doigt (94) venant se positionner entre deux dents de la roue dentée (28), bloquant ladite roue dentée (28) en rotation.

8. Boîte de vitesses selon la revendication 7, **caractérisée en ce que** ladite zone de blocage (F) de la piste (32) associée au poussoir (2) correspond angulairement à des zones neutres (N) des pistes (31) associées audites fourchettes (5).

9. Véhicule automobile comportant une boîte de vitesses selon l'une quelconque des revendications 1 à 8.
